# DEMANDE DE BREVET EUROPEEN

(11) **EP 1 437 252 A1**
(43) Date de publication de la demande: **14.07.2004**
(21) Numéro de dépôt: 04290036.5
(22) Date de dépôt: 07.01.2004
(51) Int. Cl.: B60K 15/07, B60K 15/01, F17C 13/08

(54) **Véhicule automobile muni d'un réservoir de gaz sous pression et de moyens de connexion automatiques de ce réservoir**

(30) Priorité: 10.01.2003 FR 0300259
(71) Demandeur: Peugeot Citroen Automobiles SA, 92200 Neuilly sur Seine (FR)
(72) Inventeur: Campanella, Thierry, 91310 Linas (FR); Villadier, Bernard, 91370 Verrieres le Buisson (FR)
(74) Mandataire: Thinat, Michel

(57) **Abrégé**

L'invention concerne un véhicule automobile comprenant une pile à combustible, un réservoir d'hydrogène sous pression (10), et un conduit d'alimentation de la pile à combustible en hydrogène, le réservoir (10) étant mobile par translation entre une position d'utilisation dans laquelle le réservoir (10) est connecté à une extrémité de branchement (32) du conduit d'alimentation, et une position de remplacement dans laquelle le réservoir (10) est déconnecté de ladite extrémité de branchement.

Selon l'invention, le véhicule comprend des moyens pour connecter automatiquement le réservoir (10) à l'extrémité de branchement du conduit d'alimentation quand ce réservoir (10) passe de sa position de remplacement à sa position d'utilisation.

## Description

L'invention concerne en général l'industrie automobile et les véhicules équipés de piles à combustible.

Plus précisément, l'invention concerne un véhicule automobile comprenant un organe de production d'énergie, un réservoir de gaz sous pression, et un conduit d'alimentation de l'organe de production d'énergie en gaz, le réservoir étant mobile par translation entre une position d'utilisation dans laquelle le réservoir est connecté à une extrémité de branchement du conduit d'alimentation, et une position de remplacement dans laquelle le réservoir est déconnecté de ladite extrémité de branchement.

On connaît dans l'art antérieur, un véhicule de ce type muni d'une pile à combustible à l'avant et d'un réservoir à hydrogène disposé à l'arrière de ce véhicule. Des moyens de coulissement permettent de déplacer le réservoir vers l'arrière jusqu'à sa position de remplacement dans laquelle il est facile de le démonter, par exemple pour le remplacer quand il est vide.

L'interface entre le réservoir et le véhicule n'est pas décrite. Rien n'est indiqué concernant les moyens permettant de raccorder les différents circuits du réservoir à ceux du véhicule.

Or ce point est particulièrement important, tout particulièrement du fait des risques d'explosion liés à l'utilisation de l'hydrogène. Les possibilités de fausses manoeuvres de l'utilisateur conduisant à une fuite d'hydrogène doivent être limitées au maximum.

Dans ce contexte, la présente invention a pour but de proposer une interface entre le réservoir et le véhicule qui réponde au souci mentionné ci-dessus.

A cette fin, le véhicule de l'invention, par ailleurs conforme à la définition générique qu'en donne le préambule ci-dessus, est essentiellement caractérisé en ce qu'il comprend des moyens pour connecter automatiquement le réservoir à l'extrémité de branchement du conduit d'alimentation quand ce réservoir passe de sa position de remplacement à sa position d'utilisation.

Dans un mode de réalisation possible de l'invention, les moyens pour connecter automatiquement le réservoir à l'extrémité de branchement comprennent un raccord auto-obturant d'alimentation constituant une sortie du réservoir, et un raccord auto-obturant de réception, complémentaire du raccord auto-obturant d'alimentation et monté à l'extrémité de branchement du conduit d'alimentation, le raccord auto-obturant d'alimentation venant s'adapter sur le raccord auto-obturant de réception quand le réservoir adopte sa position d'utilisation et mettant en communication le réservoir avec le conduit d'alimentation .

Avantageusement, le raccord de réception fait saillie sur un panneau de branchement du véhicule, le raccord d'alimentation faisant saillie sur une face de branchement du réservoir située immédiatement en regard du panneau de branchement quand le réservoir est en position d'utilisation.

De préférence, le raccord de réception est disposé dans un boîtier muni d'un volet mobile entre une position de fermeture interdisant l'accès au raccord de réception et une position d'ouverture autorisant l'adaptation du raccord d'alimentation sur le raccord de réception, le véhicule comprenant des moyens pour provoquer l'ouverture automatique du volet quand le réservoir approche de sa position d'utilisation.

Par exemple, le véhicule comprend des moyens de verrouillage automatique du réservoir en position d'utilisation.

Avantageusement, les moyens de verrouillage automatique du réservoir comprennent au moins une gâche disposée sur le panneau de branchement, et un penne disposé sur la face de branchement du réservoir, le penne s'engageant automatiquement dans la gâche quand le réservoir approche de sa position d'utilisation.

De préférence, le réservoir comprend au moins un circuit électrique, le véhicule comprenant une source électrique et des moyens de raccordement automatique dudit circuit électrique à la source électrique quand le réservoir passe de sa position de remplacement à sa position d'utilisation.

Par exemple, les moyens de raccordement automatique du circuit électrique à la source électrique comprennent au moins un connecteur source disposé sur le panneau de branchement et au moins un connecteur récepteur disposé sur la face de branchement du réservoir et complémentaire du connecteur source, le connecteur récepteur venant s'adapter sur le connecteur source quand le réservoir passe de sa position de remplacement à sa position d'utilisation.

Avantageusement, le véhicule comprend des bras télescopiques solidaires d'un élément de structure du véhicule, le réservoir étant fixé sur ces bras télescopiques et passant de sa position d'utilisation à sa position de remplacement par déploiement et rétraction de ces bras télescopiques.

De préférence, l'organe de production d'énergie est une pile à combustible, le gaz stocké dans le réservoir étant de l'hydrogène.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une représentation schématique partielle en perspective d'un véhicule selon l'invention,
- la figure 2 est une vue en perspective du réservoir de la figure 1 et du panneau de branchement constituant l'interface du véhicule avec ce réservoir,
- la figure 3 est une vue en perspective suivant la flèche III de la figure 2 montrant la face de branchement constituant l'interface du réservoir avec le véhicule,
- la figure 4 est une vue en perspective agrandie du panneau de branchement de la figure 2,
- la figure 5 est une vue en perspective agrandie de la face de branchement de la figure 3,
- la figure 6 est une vue en perspective agrandie d'une partie du boîtier de la figure 4, volet ouvert,
- la figure 7 est une vue en perspective suivant la flèche VII de la figure 6, et
- la figure 8 est une vue en coupe vue selon l'incidence des flèches VIII de la figure 2, le réservoir étant représenté dans sa position d'utilisation.

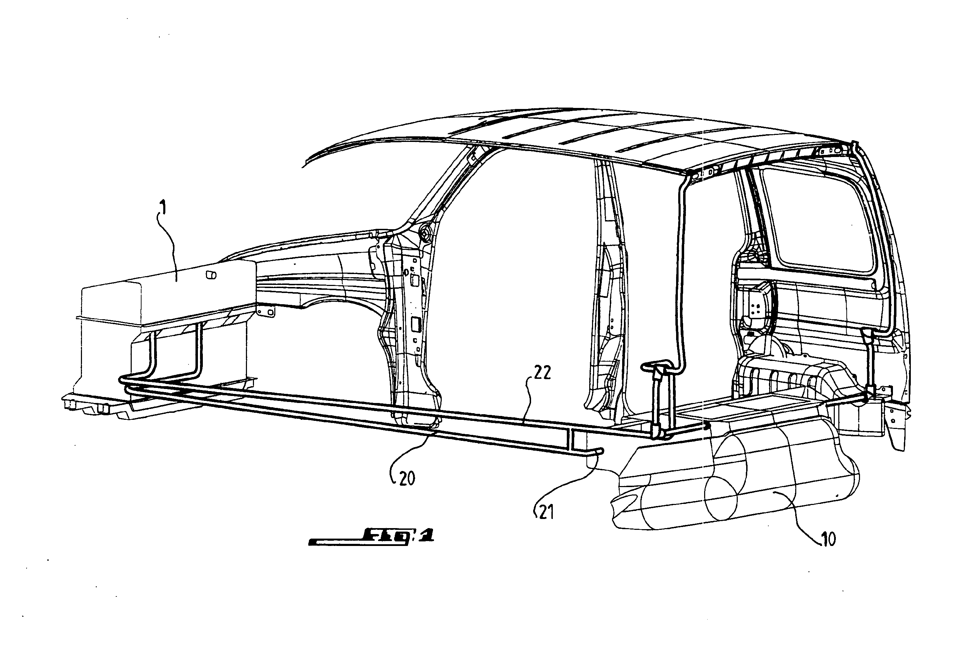

Le véhicule automobile représenté à la figure 1 comprend un organe de production d'énergie 1 disposé dans un compartiment avant du véhicule, un réservoir de gaz sous pression 10 disposé à l'arrière, et un conduit d'alimentation 20 de l'organe de production d'énergie 1 en gaz.

Dans l'exemple de réalisation décrit ci-dessous, l'organe de production d'énergie 1 est une pile à combustible, le gaz stocké dans le réservoir 10 étant de l'hydrogène. Mais ce gaz peut également être du gaz naturel (GNV) alimentant un organe de production d'énergie différent d'une pile à combustible.

Le réservoir 10 est mobile par translation vers l'arrière du véhicule, entre une position d'utilisation dans laquelle le réservoir 10 est connecté à une extrémité de branchement 21 du conduit d'alimentation 20, et une position de remplacement dans laquelle le réservoir 10 est déconnecté de ladite extrémité de branchement.

L'hydrogène est stocké à une pression de l'ordre de 300 bars dans le réservoir 10. Il peut circuler, en position d'utilisation du réservoir 10, de ce réservoir 10 vers la pile à combustible 1 par l'intermédiaire du conduit d'alimentation 20 et subit plusieurs détentes qui l'amènent à une pression d'utilisation compatible avec les caractéristiques de fonctionnement de la pile.

Une partie de l'hydrogène est consommée dans la pile. Le véhicule comprend un conduit 22 de rejet dans l'atmosphère de l'hydrogène non consommé par la pile 1.

Dans sa position de remplacement, le réservoir 10 peut facilement être démonté par un utilisateur et remplacé. Cette opération est effectuée quand le réservoir 10 est vide pour le remplacer par un réservoir plein.

Selon l'invention, le véhicule comprend des moyens pour connecter automatiquement le réservoir 10 à l'extrémité de branchement 21 du conduit d'alimentation 20 quand ce réservoir 10 passe de sa position de remplacement à sa position d'utilisation.

Plus précisément, ces moyens comprennent un raccord auto-obturant d'alimentation 31 constituant une sortie du réservoir 10, et un raccord auto-obturant de réception 32, complémentaire du raccord auto-obturant d'alimentation 31 et monté à l'extrémité de branchement 21 du conduit d'alimentation 20.

Le raccord auto-obturant d'alimentation 31 vient s'adapter sur le raccord auto-obturant de réception 32 quand le réservoir 10 adopte sa position d'utilisation et met en communication le réservoir 10 avec le conduit d'alimentation 20.

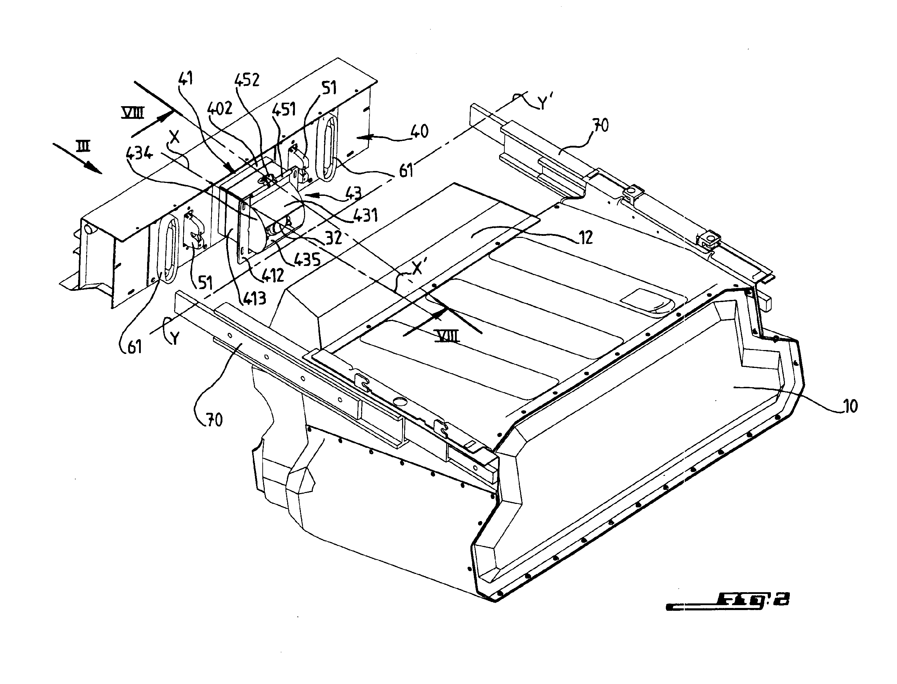

Ces raccords auto-obturants sont de type connu. Dans le mode de réalisation de l'invention illustré sur les figures 2 à 7, le raccord d'alimentation 31 est de type mâle et vient s'engager dans le raccord de réception 32 de type femelle.

Les raccords d'alimentation et de réception s'obturent automatiquement l'un et l'autre quand le raccord d'alimentation n'est pas engagé dans le raccord de réception. Au contraire, ils laissent passer l'hydrogène quand le raccord d'alimentation est engagé dans le raccord de réception.

Comme on peut le voir sur la figure 2, le raccord de réception 32 fait saillie sur un panneau de branchement 40 sensiblement plan constituant l'interface du véhicule avec le réservoir. Ce panneau est allongé dans une direction transversale Y-Y'. De même, le raccord d'alimentation 31 fait saillie sur une face de branchement 11 du réservoir 10, sensiblement plane et allongée dans la même direction transversale Y-Y', constituant l'interface du réservoir avec le véhicule.

La face de branchement 11 vient en regard du panneau de branchement 40, à proximité immédiate de ce panneau, quand le réservoir 10 est en position d'utilisation. Une butée, non représentée, permet de limiter la course du réservoir 10 arrivant à sa position d'utilisation et de fixer exactement la distance entre le panneau de branchement 40 et la face de branchement 11.

Le raccord d'alimentation 31 et le raccord de réception sont alignés suivant une direction principale X-X' sensiblement perpendiculaire au panneau de branchement 40 et à la face de branchement 11. Le réservoir 10 se déplace suivant cette direction principale X-X' quand il passe de sa position de remplacement à sa position d'utilisation.

On voit nettement sur la figure 2 que le raccord de réception 32 est disposé dans un boîtier 41 muni d'un volet 411 mobile entre une position de fermeture interdisant l'accès au raccord de réception 32 et une position d'ouverture autorisant l'adaptation du raccord d'alimentation 31 sur le raccord de réception 32.

Le boîtier 41 comprend un corps 413 creux, de section carré perpendiculairement à la direction principale X-X', délimitée par quatre parois minces.

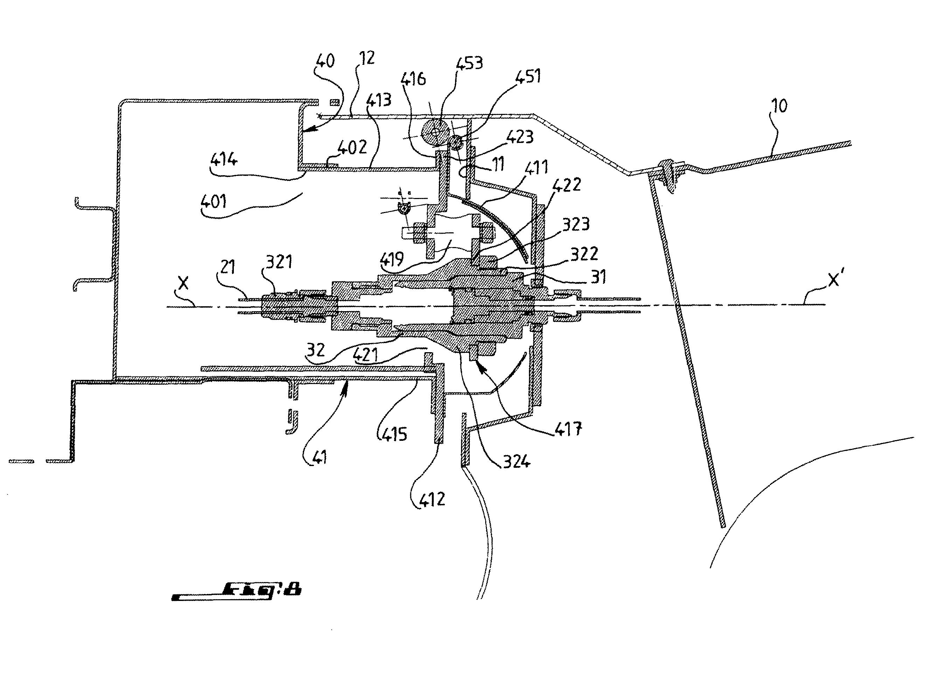

Comme le montre la figure 8, un orifice 401 est découpé dans le panneau de branchement 40 au niveau du raccord de réception 32. Cet orifice présente une forme creuse et est délimité par des bords dressés 402 faisant saillie vers la face de branchement 11 par rapport au panneau de branchement.

Les parois du corps 413 suivent les bords dressés 402, du côté intérieur à l'orifice 401, et sont solidaires de ces bords dressés par des premiers bords libres 414 respectifs. Ils sont fixés sur les bords dressés par des moyens connus, par exemple par soudage. Le corps 413 fait saillie vers la face de branchement 11 à partir du panneau de branchement 40.

Chaque paroi du corps 413 présente par ailleurs un second bord libre 415 opposé au premier présentant un rebord 416 dressé vers l'extérieur du corps 413.

Le boîtier 41 comprend également une plaque de fermeture 412, de forme carrée, venant fermer le corps creux 413 du côté des seconds bords libres 415. La plaque de fermeture 412 est plaquée sur les rebords 416 et fixée sur ces rebords par des moyens connus, par soudage ou par des vis par exemple.

Une plaque de fixation triangulaire 417 est disposée parallèlement à la plaque de fermeture 412, légèrement décalée vers la face de branchement 11.

La plaque de fixation 417 est fixée sur la plaque de fermeture 412 par des moyens de fixation élastiques 419 de type silent-bloc ou tout autre moyen équivalent permettant de maintenir un écartement approprié entre la plaque de fermeture 412 et la plaque de fixation 417, tout en absorbant les défauts d'alignement. Ces silentblocs, par exemple au nombre de trois, sont déposés aux trois sommets du triangle, entre la plaque de fermeture 412 et la plaque de fixation 417.

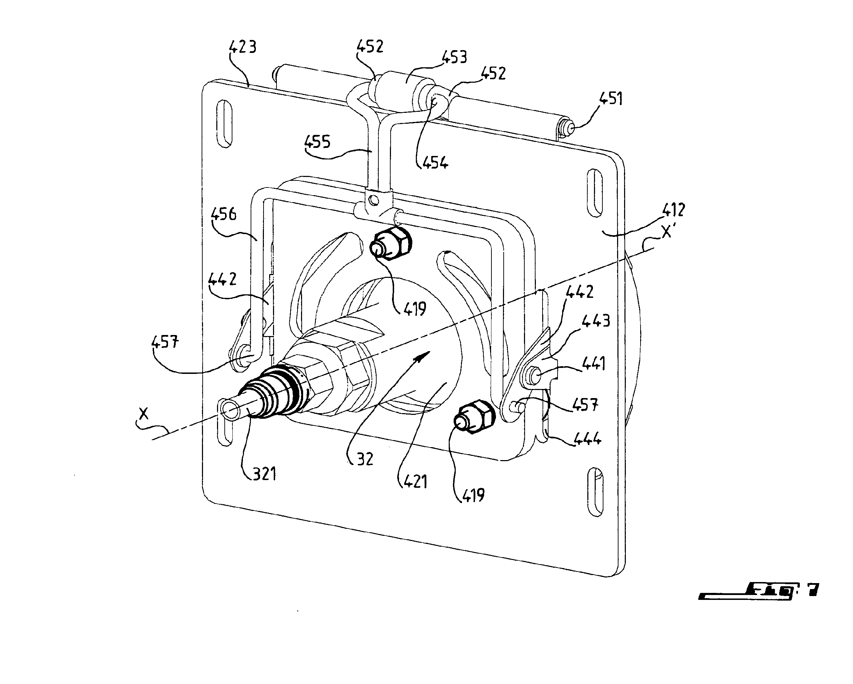

Comme le montre la figure 7, le raccord de réception 32 présente une extrémité étroite 321 montée de façon étanche sur l'extrémité de branchement 21 du conduit d'alimentation 20, et une extrémité large 322 opposée à l'extrémité étroite 321 dans laquelle vient s'engager le raccord d'alimentation 31.

L'extrémité large 322, de forme extérieure générale cylindrique, porte une gorge périphérique dans laquelle est engagé un écrou 323. Cette extrémité large porte également un épaulement 324, légèrement décalé vers l'extrémité étroite 321 par rapport à la gorge .

Par ailleurs, la plaque de fixation 417 est percée en son centre d'un trou rond présentant un bord rond 422 engagé et comprimé entre l'écrou 323 et l'épaulement 324. L'écartement entre l'écrou et l'épaulement est choisi de telle sorte que le raccord de réception 32 est rigidement fixé sur la plaque de fixation 417.

La plaque de fermeture 412 est percée en son centre d'un orifice circulaire 421 aligné avec le trou de la plaque de fixation 417 et traversé par le raccord de réception 32.

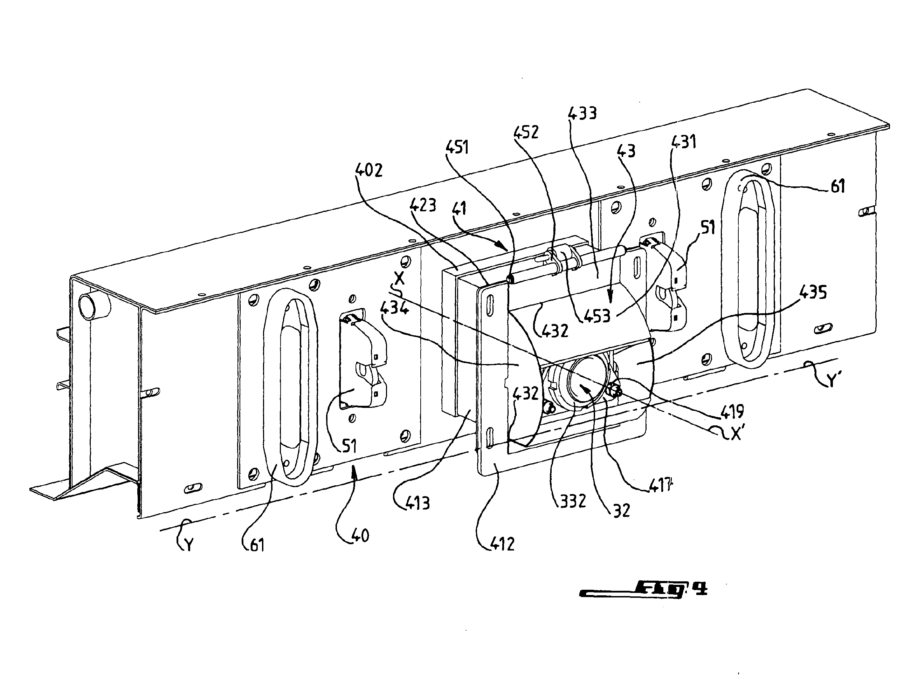

Comme le montre la figure 4, le boîtier 41 comprend encore une partie de protection 43 fixée sur une face de la plaque de fermeture 412 tournée vers la face de branchement 11, et recouvrant complètement l'extrémité large du raccord de réception 32 et la plaque de fixation 417.

Cette partie comprend une plaque avant 431 sensiblement hemicylindrique, d'axe parallèle à la direction transversale Y-Y', reposant sur la plaque de fermeture 412 par deux bords droits 432 opposés. Ces bords droits 432 sont prolongés vers l'extérieur du demi-cylindre par des rebords de fixation 433 plaqués sur la plaque de fermeture 412 et fixés sur celle-ci par soudage ou par des vis. La partie de protection 43 comprend également deux plaques latérales 434, sensiblement en demi-disque, fermant la plaque avant hémicylindrique 431 de ses deux côtés axiaux opposés. Ces plaques latérales sont par exemple soudées sur la plaque avant et sur la plaque de fermeture.

La plaque avant 431 est percée d'une ouverture 435 s'étendant en secteur de cylindre sur toute la longueur axiale de la plaque avant 431 et sur un angle d'environ 30°. L'extrémité large 322 du raccord de réception 32 est disposée immédiatement derrière cette ouverture.

Le volet 411 présente une forme en secteur de cylindre et des dimensions correspondantes à celle de l'ouverture 435. Il coulisse le long d'une face intérieure de la plaque avant 431, vient obturer cette ouverture en position de fermeture et la dégage en position d'ouverture.

Le volet 411 est monté pivotant autour de deux axes de pivotement 441 alignés, par l'intermédiaire de biellettes 442. Les axes de pivotement 441 sont parallèles à la direction transversale Y-Y' et sont portés par des chapes 443 constituant un prolongement de la face 434 traversant la plaque de fermeture 412 du côté opposé à la face de branchement 11. Les biellettes 442 sont solidaires de deux extrémités axiales opposées du volet 411 et traversent la plaque de fermeture 412 par des fentes droites parallèles 444 ménagées dans la plaque de part et d'autre de l'orifice 421. Ces fentes sont alignées avec l'orifice 421 selon la direction transversale Y-Y'.

Le véhicule comprend des moyens pour provoquer l'ouverture automatique du volet 411 quand le réservoir 10 approche de sa position d'utilisation.

Ces moyens comprennent un axe de basculement 451 parallèle à la direction transversale Y-Y' et solidaire d'un bord supérieur 423 de la plaque de fermeture 412, deux bras parallèles 452 articulés par des premières extrémités respectives autour de l'axe de basculement 451, et un rouleau 453 monté mobile en rotation autour d'une barre 454 traversant des secondes extrémités des bras 452 opposées aux premières extrémités. Le rouleau 453 est disposé entre les deux bras 452.

Le bord supérieur 423 de la plaque de fermeture 412 s'étend parallèlement à la direction transversale Y-Y' et correspond au côté supérieur de la plaque sur les figures 2, 4, 6 et 7. Les deux bras 452 s'étendent en direction opposée à la face de branchement 11 à partir du bord supérieur 423.

La barre 454 est parallèle à la direction transversale Y-Y' et se prolonge de part et d'autre des deux bras 452, en direction opposée à la face de branchement 11, par des parties en courbe se rejoignant pour former une partie d'actionnement 455 droite s'étendant parallèlement à la plaque de fermeture 412 en direction du centre de l'orifice circulaire 421.

Cette partie d'actionnement 455 est rigidement fixé par une extrémité opposée au rouleau 453 à une pièce en U 456 s'étendant dans un plan parallèle à la plaque de fermeture 412. Cette pièce en U comprend une barre centrale prolongée par deux barres latérales, la partie d'actionnement étant fixée à un point central de la barre centrale, et les barres latérales étant montées à rotation par des extrémités libres respectives 457 sur les biellettes 442.

Comme on le voit sur la figure 7, les biellettes 442 sont montés pivotantes autour des axes 441 par des parties centrales, les extrémités libres 457 étant liées à des extrémités des biellettes 442 opposées au volet 411.

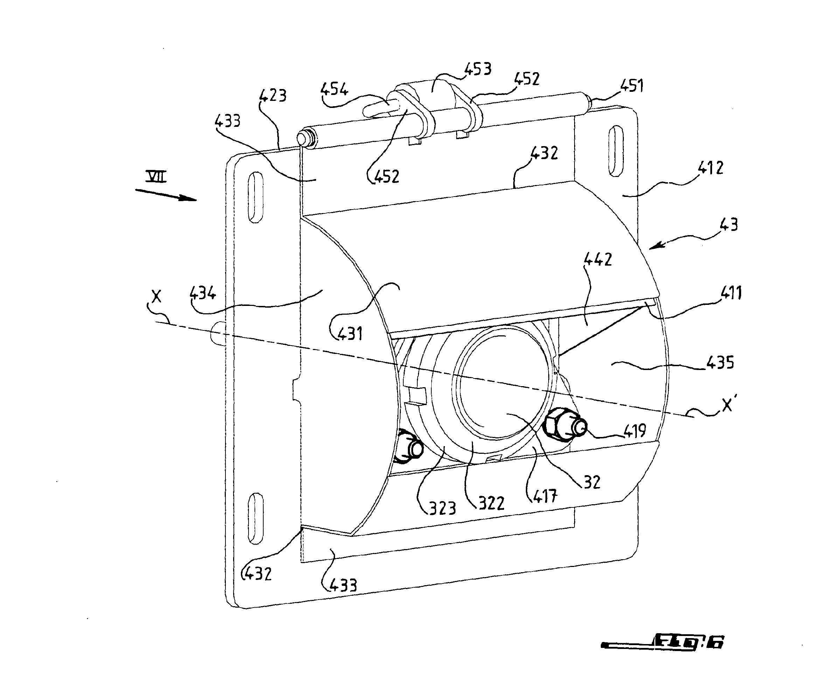

Des ressorts de rappel, non représentés, sollicitent les extrémités libres 457 en direction du bord supérieur de la plaque de fermeture 412 jusqu'à une position de rappel correspondant à la position fermée du volet 411. Le rouleau 453 fait alors saillie, dans cette configuration, par rapport au bord supérieur 423. Le rouleau 453 est situé au-dessus de ce bord sur les figures 6 et 7.

Les moyens pour provoquer l'ouverture automatique du volet 411 comprennent un rebord en saillie 12 entourant une partie de la face de branchement 11 et faisant saillie à partir de celle-ci vers le panneau de branchement 40.

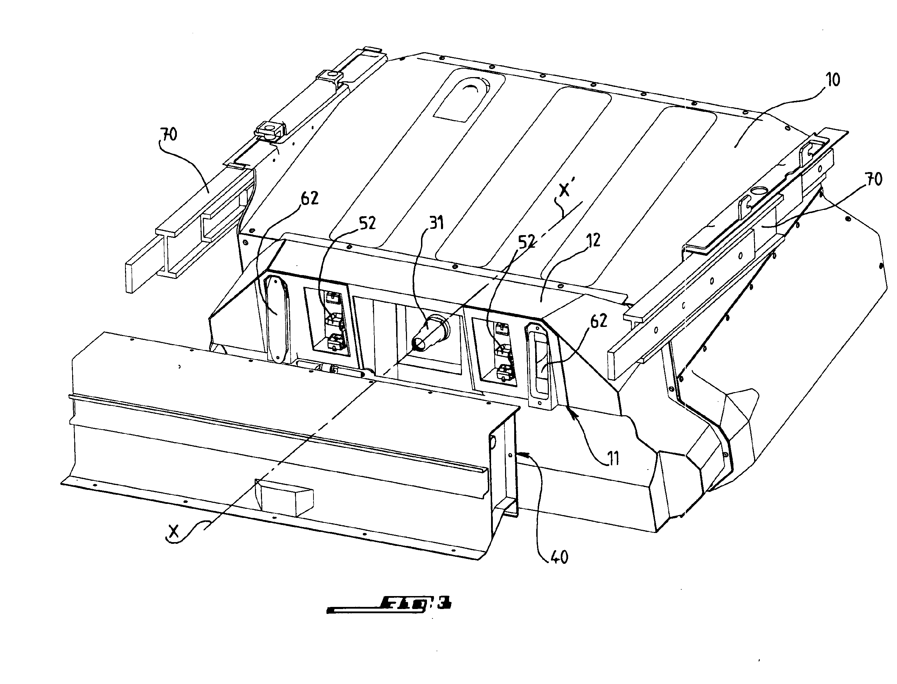

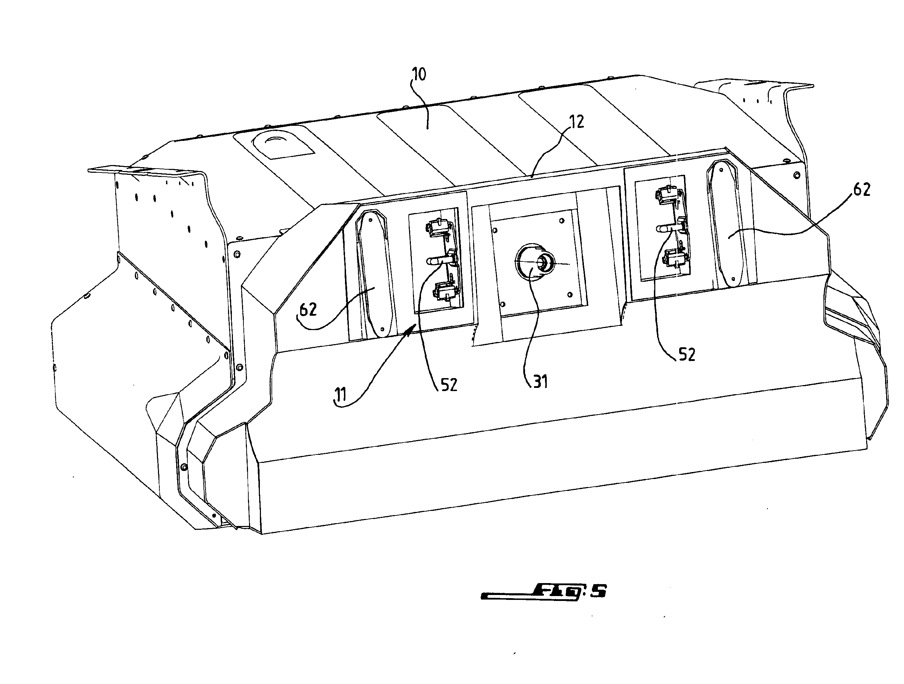

Comme le montrent les figures 3 et 5, ce rebord en saillie 12 suit toute la longueur d'un bord supérieur de la face de branchement 12 correspondant au bord supérieur 423 de la plaque de fermeture, et se prolonge des deux côtés latéraux opposés de cette face de branchement.

Quand le réservoir 10 approche de sa position d'utilisation, le rebord en saillie 12 vient appuyer sur le rouleau 453 et sollicite celui-ci vers le bas de la figure 7, c'est-à-dire vers l'orifice 421, à l'encontre de la force de rappel du ressort.

Les biellettes 442 entraînent alors le volet 411 en rotation en direction du bord supérieur 423 de la plaque de fermeture, dégageant l'ouverture 435.

La taille du rebord en saillie 12 est déterminée de telle sorte qu'il actionne le rouleau 453 avant que l'extrémité du raccord d'alimentation 31 n'arrive au niveau du volet 411.

Le véhicule comprend par ailleurs des moyens de verrouillage automatique du réservoir 10 en position d'utilisation.

Ces moyens de verrouillage automatique sont de type connu et comprennent deux gâches 51 disposées sur le panneau de branchement 40, de part et d'autre du raccord de réception 32 suivant la direction transversale Y-Y', et deux pennes 52 disposés sur la face de branchement 11 du réservoir 10, de part et d'autre du raccord d'alimentation suivant la direction transversale Y-Y'.

Les deux pennes 52 s'engagent automatiquement dans les gâches 51 quand le réservoir 10 approche de sa position d'utilisation.

Les gâches 51 sont commandées électriquement et maintiennent le réservoir 10 solidement en place tant qu'une commande de libération ne leur est pas transmise.

Les gâches 51 font saillie par rapport au panneau de branchement 40, et les pennes 52 sont disposés dans des logements ménagés dans la face de branchement 11 et de taille correspondante à celle des gâches.

Le réservoir 10 comprend au moins un circuit électrique, alimentant par exemple des sondes de mesure, de température ou des électrovannes.

Ce circuit est alimenté par une source électrique, non représentée, disposée dans le véhicule. A cet effet, le véhicule comprend des moyens de raccordement automatique dudit circuit électrique à la source électrique quand le réservoir 10 passe de sa position de remplacement à sa position d'utilisation.

Plus précisément, ces moyens de raccordement automatique sont de type connu et comprennent deux connecteurs sources 61 électriquement reliés à la source et disposés sur le panneau de branchement 40 et deux connecteurs récepteurs 62 disposés sur la face de branchement 12 du réservoir 10 et complémentaire des connecteurs sources 61.

Les connecteurs récepteurs 62 viennet s'adapter automatiquement sur les connecteurs sources 61 quand le réservoir 10 passe de sa position de remplacement à sa position d'utilisation.

Les connecteurs sources 61 sont disposés symétriquement par rapport au raccord de réception 32 selon la direction transversale Y-Y', sont alignés avec les gâches 51 et sont relativement plus éloignés du raccord de réception 32 que ces gâches 51.

De même, les connecteurs récepteurs 62 sont disposés symétriquement par rapport au raccord d'alimentation 31 selon la direction transversale Y-Y', et sont alignés avec les pennes 52 et relativement plus éloignés du raccord d'alimentation 31 que les pennes 52.

Enfin, on notera que le véhicule comprend des bras télescopiques 70 solidaires d'un élément de structure du véhicule non représenté et pouvant se déployer vers l'arrière du véhicule parallèlement la direction principale X-X'.

Le réservoir 10 est fixé de façon amovible sur ces bras télescopiques 70 de deux côtés opposés. Il passe de sa position d'utilisation à sa position de remplacement par déploiement de ces bras télescopiques 70, et inversement de sa position de remplacement à sa position d'utilisation par rétraction de ces bras.

Le réservoir 10 est ainsi guidé dans son mouvement de mise en place.

On comprend donc bien que l'invention permet une mise en place particulièrement facile et sûre du réservoir 10 dans le véhicule. Le réservoir est guidé par les bras télescopiques 70 jusqu'à sa position d'utilisation, et se présente donc toujours sous un angle approprié pour les connexions des raccords auto-obturants et des contacteurs électriques et pour le verrouillage du réservoir.

Par ailleurs, les raccords auto-obturants peuvent être des raccords de marque Stäubli, de type SPC, qui présentent l'avantage de compenser automatiquement les défauts d'alignement à l'accouplement. Les risques de fuites d'hydrogène dues à un mauvais accouplement sont encore réduits.

Les risques d'endommagement du raccord de réception quand le réservoir est démonté sont fortement diminués du fait que l'accès à ce raccord est empêché par un volet. Les chocs accidentels ne sont donc pas possibles.

De même, la face de branchement du réservoir est partiellement protégée par un rebord en saillie qui l'entoure partiellement et en limite l'accessibilité.

## Revendications

1. Véhicule automobile comprenant un organe de production d'énergie (1), un réservoir (10) de gaz sous pression, et un conduit d'alimentation (20) de l'organe de production (1) en gaz, le réservoir (10) étant mobile par translation entre une position d'utilisation dans laquelle le réservoir (10) est connecté à une extrémité de branchement (21) du conduit d'alimentation (20), et une position de remplacement dans laquelle le réservoir (10) est déconnecté de ladite extrémité de branchement (21), **caractérisé en ce qu'**il comprend des moyens pour connecter automatiquement le réservoir (10) à l'extrémité de branchement (21) du conduit d'alimentation (20) quand ce réservoir (10) passe de sa position de remplacement à sa position d'utilisation.

2. Véhicule automobile selon la revendication 1, **caractérisé en ce que** les moyens pour connecter automatiquement le réservoir (10) à l'extrémité de branchement (21) comprennent un raccord auto-obturant d'alimentation (31) constituant une sortie du réservoir (10), et un raccord auto-obturant de réception (32), complémentaire du raccord auto-obturant d'alimentation (31) et monté à l'extrémité de branchement (21) du conduit d'alimentation (20), le raccord auto-obturant d'alimentation (31) venant s'adapter sur le raccord auto-obturant de réception (32) quand le réservoir (10) adopte sa position d'utilisation et mettant en communication le réservoir (10) avec le conduit d'alimentation (20).

3. Véhicule automobile selon la revendication 2, **caractérisé en ce que** le raccord de réception (32) fait saillie sur un panneau de branchement (40) du véhicule, le raccord d'alimentation (31) faisant saillie sur une face de branchement (11) du réservoir (10) située immédiatement en regard du panneau de branchement (40) quand le réservoir (10) est en position d'utilisation.

4. Véhicule automobile selon la revendication 3, **caractérisé en ce que** le raccord de réception (32) est disposé dans un boîtier (41) muni d'un volet (411) mobile entre une position de fermeture interdisant l'accès au raccord de réception (32) et une position d'ouverture autorisant l'adaptation du raccord d'alimentation (31) sur le raccord de réception (32), le véhicule comprenant des moyens pour provoquer l'ouverture automatique du volet (411) quand le réservoir (10) approche de sa position d'utilisation.

5. Véhicule automobile selon l'une quelconque des revendications précédentes, **caractérisé en ce qu'**il comprend des moyens de verrouillage automatique du réservoir (10) en position d'utilisation.

6. Véhicule automobile selon la revendication 5 en combinaison avec les revendications 3 ou 4, **caractérisé en ce que** les moyens de verrouillage automatique du réservoir (10) comprennent au moins une gâche (51) disposée sur le panneau de branchement (40), et un penne (52) disposé sur la face de branchement (11) du réservoir (10), le penne (52) s'engageant automatiquement dans la gâche (51) quand le réservoir (10) approche de sa position d'utilisation.

7. Véhicule automobile selon l'une quelconque des revendications précédentes, **caractérisé en ce que** le réservoir (10) comprend au moins un circuit électrique, le véhicule comprenant une source électrique et des moyens de raccordement automatique dudit circuit électrique à la source électrique quand le réservoir (10) passe de sa position de remplacement à sa position d'utilisation.

8. Véhicule automobile selon la revendication 7 en combinaison avec les revendications 3 ou 4, **caractérisé en ce que** les moyens de raccordement automatique du circuit électrique à la source électrique comprennent au moins un connecteur source (61) disposé sur le panneau de branchement (40) et au moins un connecteur récepteur (62) disposé sur la face de branchement (11) du réservoir (10) et complémentaire du connecteur source (61), le connecteur récepteur (62) venant s'adapter sur le connecteur source (61) quand le réservoir (10) passe de sa position de remplacement à sa position d'utilisation.

9. Véhicule automobile selon l'une quelconque des revendications précédentes, **caractérisé en ce qu'**il comprend des bras télescopiques (70) solidaires d'un élément de structure du véhicule, le réservoir (10) étant fixé sur ces bras télescopiques (70) et passant de sa position d'utilisation à sa position de remplacement par déploiement et rétraction de ces bras télescopiques (70).

10. Véhicule automobile selon l'une quelconque des revendications précédentes, **caractérisé en ce que** l'organe de production (1) est une pile à combustible, le gaz stocké dans le réservoir (10) étant de l'hydrogène.
